Europäisches Patentamt

European Patent Office

Office européen des brevets

(11) Publication number: **0 306 172**
**A1**

## EUROPEAN PATENT APPLICATION

(21) Application number: **88307545.9**

(22) Date of filing: **15.08.88**

(51) Int. Cl.4: **C04B 14/20 , C01B 33/28 , C01B 33/22**

(30) Priority: **31.08.87 US 91443**
**31.08.87 US 91444**

(43) Date of publication of application:
**08.03.89 Bulletin 89/10**

(84) Designated Contracting States:
**DE FR GB**

(71) Applicant: **Corning Glass Works**
**Sullivan Park FR-212**
**Corning New York 14831(US)**

(72) Inventor: **Rittler, Hermann L.**
**Box 384 R.D. No. 2**
**Corning New York(US)**

(74) Representative: **Kyle, Diana et al**
**ELKINGTON AND FIFE Beacon House 113**
**Kingsway**
**London WC2B 6PP(GB)**

(54) **Stabilized phyllosilicates and method for their production.**

(57) Stabilized, delaminated phyllosilicates as disclosed, and a method of producing the same, wherein the phyllosilicate is heated in the presence of a reactive vapor phase, preferably a hydrogen-containing atmosphere. The delaminated phyllosilicate is less than 1000Å thick, and is stabilized against moisture pickup. The formation of either a layer of a transition metal, or an organic reactive site, on the phyllosilicate surface is also disclosed.

Also disclosed is a delaminated phyllosilicate particle of less than 1000Å thickness and having a coating of metal on its surface, the metal being selected from the transition elements and groups 3a, 4a, 5a and 6a of the Periodic Table. A method of producing such particle is shown, by an ion exchange treatment coupled with a reactive vapor phase/thermal treatment. A ceramic-metal composite composed of such metal coated particles compressed in a solid body is also disclosed.

Xerox Copy Centre

## STABILIZED PHYLLOSILICATES AND METHOD FOR THEIR PRODUCTION.

This invention is concerned with providing a delaminated phyllosilicate that is hydrolytically and hygroscopically stabilized, and with a method of producing such material. Phyllosilicates are also known as hydrated sheet, or lattice layered, silicates.

The invention comprehends the entire genus of hydrated, or hydratable, phyllosilicates. It is especially concerned with the three layer micas, whether of natural or synthetic origin, although not so limited. These silicate minerals include vermiculite, beidellite, nontronite, volchonskoite, saponite, stevensite, sauconite, pimelite, bentonite, montmorillonite, hectorite, the smectites, attapulgite, sepiolite, phlogopite, and biopyribole. The most widely known and extensively studied of these minerals, vermiculite, is of particular interest.

The silicate layer units in these minerals have a thickness of about 10 Angstrom ($\overset{\circ}{A}$) units, with the main elemental constituents being Mg, Al, Si, and O. These layers are separated by an interlayer composed of water molecules associated with cations, such as $Mg^{++}$, $Ca^{++}$, $Na^{+}$, $K^{+}$, and $H^{+}$. Before utilizing these minerals, it is frequently desirable to delaminate the particles, that is, separate the crystals at the interlayer to form smaller or high aspect ratio particles or platelets.

It is conventional practice to delaminate the layered silicates by heating to an elevated temperature. This causes the water-containing interlayer to expand and pop open. It has also been proposed to expand vermiculite particles by refluxing in an aqueous solution of a salt such as lithium chloride. Subsequent application of a shearing force causes the crystals to separate at the interlayer and form an aqueous gel.

U.S. Patent No. 4,676,929 describes a method of delamination wherein a hydrated phyllosilicate is dispersed in an expanding agent, which may be a primary aminocarboxy acid, or lysine orotate, or glycylglycine. When accompanied by a shearing force, the expanding agent is effective, at ambient temperature, to separate the silicate layer units of the phyllosilicate crystal in a matter of minutes, and form a gel.

My pending application, Serial Number 861,939 filed May 12, 1986, describes a modification of the procedure in Patent Number 4,676,929. There, a phyllosilicate is exposed to a source of exchangeable cations to effect a change in the chemical makeup of the phyllosilicate interlayer before being reacted with an expanding agent to delaminate the phyllosilicate and form a gel. It is further taught that the cations introduced by exchange tend to neutralize a negative charge on the phyllosilicate, and thereby stabilize a flocculated product which may be formed as a sheet, film or fiber.

U.S. Patent 4,715,987 describes subjecting a phyllosilicate to an ion exchange treatment before reacting it with an expanding agent, as in Patent No. 4,676,929, to form a gel.

U.S. Patent 4,521,182 discloses heating a particulate material, such as vermiculite, perlite, or clay, by directing a flame downwardly within a vertical furnace, introducing the particulate material radially around the flame, and directing the material within the flame as it passes downwardly.

U.S. Patent 4,539,046 discloses producing vermiculite products that are stable in water by incorporating a source of ammonia in an aqueous suspension of vermiculite lamellae, shaping the suspension, and removing water from the suspension by heating the shaped suspension at a temperature above 100° C. The ammonia contacts the suspension as the suspension is dried.

In addition to the patents and applications thus far described, attention is directed to the following United States Patents:

U.S. Patent 3,490,887 discloses outward migration of copper ions in a ferroelectric glass-ceramic by a controlled heat treatment. The copper ions oxidize at the surface to form an oxide layer that can be reduced to metallic copper by firing in hydrogen.

U.S. Patent 3,420,645 discloses a method of making hollow glass articles from particles of aluminosilicate glass containing copper oxide by heating the particles in hydrogen at 600-1000° C to cause copper ion migration, formation of a copper film on the surface, and expansion of the particle to form a hollow body.

Phyllosilicates, as heretofore delaminated, have proven effective for some purposes. However, in other instances, such as electrical applications, the physical properties of the material have been inadequate. It is a basic purpose of the invention to provide a product and a method providing improved physical properties.

Another purpose is to provide a product and a method that provides catalytic properties.

A particularly troublesome problem, heretofore encountered with delaminated phyllosilicates, derives from their hygroscopic nature. A phyllosilicate is substantially dehydrated during delamination by heat treatment. However, there is a tendency to rehydrate once the material is cooled and allowed to stand in air. A particular purpose of the invention is to provide a delaminated phyllosilicate that is stabilized against rehydration.

A still further purpose is to provide a delaminated product having reactive organic sites on its surfaces. Such sites may permit polymerization and cross-linking to provide a uniformly chemically-bonded, ceramic-organic composite.

According to a basic aspect of the invention, delaminated phyllosilicates are provided as particles or platelets less than 1000Å in thickness, which are hydrolytically and hygroscopically stabilized.

According to a further embodiment the particles or platelets are coated with a metal on their surface. This may be a metal from groups 3a, 4a, 5a, 6a of the Periodic Table, or a transition element. The stabilized phyllosilicate may be produced by heating a phyllosilicate in contact with a reactive non-oxidizing vapor phase for a time and at a temperature sufficient to delaminate the phyllosilicate. It may be exposed to a selected vapor phase at a temperature such that a controlled organic reactive site is chemically bonded to the phyllosilicate surface.

The metal coating, if desired, may advantageously be applied by exchanging metal ions from an external source with ions from a phyllosilicate, delaminating the latter to from particles, and subjecting the particles to a thermal treatment while exposed to a reactive, non-oxidizing vapor phase.

Further advantageous embodiments of the invention are shown in the following description and the appended claims.

## General Description of the Invention

One aspect of the invention derives from the discovery that the undesirable tendency of a thermally delaminated phyllosilicate to rehydrate can be greatly minimized, and a substantially stable material provided. It has been found that, if the delaminating heat treatment is conducted in a controlled non-oxidizing atmosphere, this desirable effect can be achieved. The atmosphere may be neutral or reducing, but must contain, or be constituted by, a reactive vapor phase which may be $H_2$, $CO_2$, $CO$, $NH_3$, $CH_4$, or $C_2H_6$, among others.

The delaminating heat treatment, in a controlled atmosphere, is a significant change from previously practiced thermal delamination. Under some circumstances, it may be effective at lower temperatures than heretofore considered feasible. Also, as explained later, a higher degree of delamination, even down to unit cell size, may be achieved.

Thus, a phyllosilicate, to be delaminated, may be heated to a temperature of at least about 400°C, but not over about 1000°C, for a period of time not exceeding about one hour. Longer times and/or higher temperatures are generally unnecessary, but may be useful in development of other properties. They tend to produce physical changes in the material, such as phase transitions, electronic and polychromatic properties, or reduced surface area. For most purposes, optimum delamination, with a minimum of side effects, such as reduced surface area, is achieved with heat treatment temperatures on the order of 800°C.

The heat treatment may be conducted in any chamber adapted to maintenance of a controlled atmosphere. This may be either a batch type unit, such as a batch kiln or closed vessel, or a continuous unit, such as a tunnel kiln.

The unique feature is that the heat treatment is conducted in a neutral or a non-oxidizing atmosphere containing, or composed of, a reactive vapor phase. Where the sole concern is stabilization, forming gas or anhydrous ammonia is usually the preferred atmosphere. While hydrogen might be used alone, forming gas is obviously much less expensive and safer to use. Vapor phase materials, other than hydrogen, may be employed, including carbon monoxide, carbon dioxide, methane, ethane, propane, methanol, and anhydrous ammonia. For special effects, especially formation of reactive organic sites on the delaminated surfaces, the vapor phase material may be anhydrous ammonia, or a gaseous organic material, such as, ethylene oxide, methane, propane, or ethane.

It is generally accepted that phyllosilicates, such as vermiculite, have an unbalanced negative ionic charge. It is believed this is associated with -OH ions on the phyllosilicate surface, as well as with defects in the crystal structure. I further believe that the effect of the vapor phase/thermal treatment of the invention is to remove such surface ions, and thereby satisfy the electronic charge. As a result, the neutral surface is stabilized, or rendered functional, and resists moisture pickup after cooling.

My concept of the reactions occurring in the present method may be depicted as follows:

1. $H_2O$ (molecular) + heat - $H_2O$ + partial delamination
2a. $OH^-$ (structural) + $H^+$ - $H_2O$ + further delamination + charge stabilization
OR

2b. $2OH^-$ (structural) + 2CO- 2COOH- 2CO $+ H_2O + 1/2O_2$

It is believed that the presence of the reactive vapor phase not only exerts a stabilizing influence, but tends to cause further delamination of the phyllosilicate. This is shown by the fact that the phyllosilicate may be so strongly delaminated that it is not visible to standard x-ray diffraction analyses. This means that delamination to at least less than a hundred unit cells (1000Å) has occurred.

Electron microscope studies confirm that delamination to less than 1000Å has occurred. They further show that the particles are usually much smaller, even down to unit cell size in part. Thus, delaminated particles produced by vapor phase/thermal treatment are smaller than those obtained by prior techniques.

It is believed that this further delamination derives from removal of structural hydroxyl ion ($OH^-$) as illustrated in equation 2a or 2b above. This is also thought to be a major factor in thermal delamination occurring at lower temperatures than previously deemed necessary.

However, if the phyllosilicate particles are compressed to form a body, such as a bar or disc, they tend to orient in layers or sheets resembling the parent sheet structure. Such pressed bodies tend to show an apparent, or functional, aspect ratio of at least 100:1. For present purposes, a phyllosilicate may be delaminated by any known technique. However, since development of the metal coating requires exposure to a reactive vapor phase, it is preferred to employ the above described vapor phase/thermal treatment.

It was found that phyllosilicate particles with metallic coatings can be produced by providing the desired metal in, or on the surface of, the particle prior to the thermal/vapor phase treatment. The unique aspect of the invention of a metal coating on the delaminated phyllosilicate particles is based on the discovery of a phenomenon that occurs when a selected metal ion is introduced into a phyllosilicate by ion exchange prior to, or during, delamination of the material. I have found that the selected metal ion introduced by ion exchange can form a metal coating on the delaminated particles when the ion-exchanged particles are heated in contact with a reactive, non-oxidizing vapor phase such as hydrogen. The phyllosilicate may be heated in the present of a metal compound to effect an ion exchange between the metal and ions from the phyllosilicate, such as $Na^+$, $K^+$, or $MG^{++}$. Alternatively, the metal compound may be dried on the surface of the phyllosilicate prior to the vapor phase treatment.

The metal ion may be introduced into the phyllosilicate, for example, by immersing the phyllosilicate in a molten salt bath containing a salt of the metal for a suitable time. However, it is also possible, and much simpler, to stir the phyllosilicate in a solution of an ionizable salt of the metal for a period of time to effect the ion exchange. The exchange occurs between the metal ion of the salt and an ion in the phyllosilicate interlayer, e.g. $K^+$, $Na^+$, or $Mg^{++}$. For most purposes an aqueous solution is most convenient and economical to use. However, if desired, a non-aqueous solution may be employed, and may be necessary in some instances. Thus, a non-aqueous solution, such as alcohol, of aluminum chloride must be used in order to obtain an aluminum, rather than aluminum oxide, coating.

Alternatively, the ion exchange may be effected simultaneously with the delamination step. Thus, if the aminocarboxy acid technique is employed, the metal salt may be mixed in the acid solution. However, if the phyllosilicate is delaminated by the vapor phase/thermal treatment of my companion application, the metal salt may be dried, or otherwise coated, on the surface of the phyllosilicate prior to the thermal treatment in the reactive vapor phase. It appears that the ion migration occurs coincident with the delamination.

The phenomenon was first observed on metal ion exchanged phyllosilicates that were obtained by delamination in accordance with the aminocarboxy acid technique described in Patent 4,676,929. Briefly, a phyllosilicate is subjected to a shearing force while exposed to an expanding agent such as an aminocarboxy acid. This delaminates the phyllosilicate to form a gel.

It was discovered that, when the phyllosilicate was separated, as by centrifuging, and the solids exposed to a reactive, non-oxidizing vapor phase under thermal influence, unique effects occurred. In particular, the metal originally introduced by ion exchange appeared as a continuous film or coating on the phyllosilicate surface.

The standard sequence of preparation consists of either a precursor ion-exchange treatment of the starting materials or an exchange treatment during the routine aminoacid delamination treatment. Solids are then separated by centrifuging the gels. This is followed by thermal treatment in forming gas (92% $N_2$ 8% $H_2$), or other atmosphere containing a reactive vapor phase, at temperatures up to 1000° C

Gravimetric analyses of the ion exchanged and vapor phase treated gels disclosed a general degree of improved hygroscopic stability, especially when forming gas was employed. The best stability was obtained with a tin chloride ($SnCl_2$) exchanged gel treated one hour at 800° C in forming gas.

Surface areas of these gels were observed varying from less than one to more than 60 $M^2/gm$. Total metal content reached as high as 52.0% Sn when using tin chloride for ion-exchange and 39.9% Sb when using antimony trichloride.

XRD analyses have shown ion-exchanged phyllosilicates delaminate at much lower temperatures than would normally be the case, especially when employing $SnCl_2$, $SbCl_3$, $PbC_2H_3O_2$ and $CuCl_2$ aqueous exchanges. Metallic tin was shown present at 400°C by both XRD and DTA analyses. Metallic antimony was also observed at 400°C on the XRD traces and delamination was also observed to occur at 400°C. Similar results were observed with $PbC_2H_3O_2$ and $CuCl_2$ exchanged gels. Methylated gels or gels made containing both aminoacids and methanol also were shown to delaminate at lower temperatures than gels made only with amino acids.

Further study revealed that the phyllosilicate, whether ion exchanged or not, could be completely delaminated by the vapor phase/thermal treatment technique. However, when it had been ion exchanged with a selected metal ion, the metal appeared as a surface film or coating during the treatment.

The effect of the reactive vapor phase/thermal treatment is to further reduce phyllosilicate particle size. This is, as shown by XRD measurements, less than 1000Å in thickness and with an aspect ratio of at least 20:1. Surprisingly, however, when the delaminated particles are compressed to form a solid body, such as a test bar or disc, they tend to align in layers similar to the original sheet form. Thus, measurements on such compressed composites show an apparent or functional aspect ratio of at least 100:1.

In many instances, only metals or metal oxides are revealed in an X-ray trace, even though chemical analyses have shown the metal component to be less than 20% by weight. This further verifies that the phyllosilicate particles are less than 1000° in cross-section.

Infra-red analyses have shown that organic monomers can be chemically bonded to the phyllosilicate platelet surfaces by proper selection of the vapor phase, as well as temperature. For example, with a methane vapor phase, the presence of methyl ions has been observed. Likewise, with a $CO_2$ phase, a carbonate phase has been observed.

There is a further reason to believe that a phyllosilicate surface, subjected to a reactive vapor phase, has been chemically functionalized. In many instances, surface area measurements, utilizing the $N_2$-BET technique, are substantially lower than would normally be expected. This is believed to be due to interference by chemical groups during the measurements.

Such reactive site formation does not occur under all conditions. In particular, lower temperatures on the order of 400°-500°C appear favorable. Frequently, it is desirable to delaminate at a higher temperature. In that event, the delaminated material may be cooled subsequently to a predetermined intermediate temperature, and the requisite vapor phase introduced while the material is held at such intermediate temperature.

## Example 1

A quantity of -270 mesh vermiculite from N. Carolina was stirred in a 1M aqueous solution of copper chloride ($CuCl_2$) at room temperature to exchange copper ions with ions from the interlayer of the vermiculite. The amount of vermiculite was sufficient to provide about 10% solids. The ion-exchanged vermiculite was separated and washed thoroughly with distilled water. It was then dried at 150°C overnight.

The ion-exchanged vermiculite was then placed in a blender with 100 ml. of a 3M aqueous solution of glycine and subjected to a mild shearing force for a few minutes. This delaminated the vermiculite and formed a gel. The gel was then separated by centrifuging and washed twice with distilled water. The separated vermiculite was then dried overnight in a vacuum oven at 170°C.

The dried vermiculite was partitioned to provide eight samples. Four of these were heated in air, each at a different temperature. The remaining four were heated in a forming gas atmosphere, each at a temperature corresponding to that used for an air treated sample. The heat treating temperatures were 200°C, 400°C, 600°C, and 800°C, and treatment time in each instance was one hour.

Prior to ion exchange, the vermiculite contained only traces of copper, if any. Samples were also taken of the vermiculite as ion exchanged, of the delaminated material separated form the gel, and each of the thermal/vapor phase treated samples for chemical analysis. Analyses showed 9.23% Cu and 1.53% Cl in the initial ion-exchanged sample, and 4.33% Cu and under 0.04% Cl in the gel sample.

Samples of each thermal/vapor phase treated portion were also analyzed for copper. The results were:

| Treatment | % Cu |
|---|---|
| 200° C/air | 4.35 |
| 200° C/H$_2$ | 4.50 |
| 400° C/air | 4.65 |
| 400° C/H$_2$ | 4.57 |
| 600° C/air | 4.84 |
| 600°/H$_2$ | 5.14 |
| 800°/air | 4.93 |
| 800° C/H$_2$ | 5.20 |

Each of the eight treated samples was then left exposed in air at about 40% relative humidity. Gravimetric measurements were made at 24 and 48 hour intervals to determine cumulative moisture pickup in percent by weight. The results observed are shown below:

| Time (hrs.) | Atmosphere | Treatment Temperature (°C) | | | |
|---|---|---|---|---|---|
| | | 200 | 400 | 600 | 800 |
| 24 | air | 2.48 | 5.66 | 0.84 | 0.96 |
| 48 | air | 2.61 | 5.71 | 1.01 | 1.14 |
| 96 | air | 2.81 | 4.77 | 1.81 | 0.91 |
| 144 | air | 2.27 | 5.46 | 1.53 | 0.99 |
| 24 | N$_2$/H$_2$ | 2.98 | 3.17 | 0.09 | 0.20 |
| 48 | N$_2$/H$_2$ | 3.23 | 3.52 | 0.16 | 0.30 |
| 96 | N$_2$/H$_2$ | 3.46 | 3.04 | 0.46 | 0.27 |
| 144 | N$_2$·H$_2$ | 3.00 | 3.49 | 0.31 | 0.29 |

## Example 2

The treatment steps and observations of Example 1 were essentially repeated, except for the ion exchange solution. Here, the raw vermiculite was stirred into a 1M aqueous solution of tin chloride (SnCl$_2$).

Prior to ion exchange, the vermiculite contained only trace amounts of tin, if any. The ion exchanged material, before delamination, showed 50.1% Sn and 7.81% Cl. After delamination, and before heat treatment, the values were 52.0% Sn and 1.07% Cl.

Analyses for tin in the heat treated samples gave these values:

| Treatment | % Sn |
|---|---|
| 200° C/air | 36.0 |
| 200° C/H$_2$ | 37.2 |
| 400° C/air | 25.9 |
| 400° C/H$_2$ | 39.3 |
| 600° C/air | 16.8 |
| 600° C/H$_2$ | 47.7 |
| 800° C/air | 43.9 |
| 800° C/H$_2$ | 7.1 |

Moisture pickup in percent by weight was observed as follows:

| Time (hrs.) | Atmosphere | Treatment Temperature ($^\circ$ C) | | | |
|---|---|---|---|---|---|
| | | 200 | 400 | 600 | 800 |
| 24 | air | 4.02 | 4.73 | 1.72 | 1.56 |
| 48 | air | 4.02 | 4.71 | 1.97 | 1.75 |
| 96 | air | 4.26 | 3.89 | 2.76 | 1.53 |
| 144 | air | 3.18 | 4.47 | 2.43 | 1.62 |
| 24 | $N_2/H_2$ | 5.10 | 0.90 | 0.47 | 0.01 |
| 48 | $N_2/H_2$ | 5.53 | 1.42 | 0.48 | 0.02 |
| 96 | $N_2/H_2$ | 6.43 | 1.31 | 0.52 | 0.02 |
| 144 | $N_2/H_2$ | 5.76 | 1.52 | 0.52 | 0.02 |

## Example 3

The treatment steps and observations of Examples 1 and 2 were repeated, except that the vermiculite was stirred into a 1M aqueous solution of magnesium chloride ($MgCl_2$). Gravimetric analysis showed that the vermiculite, as received, contained 13.5% by weight Mg, while, after the treatment in $MgCl_2$, the value noted was 13.8%. This indicates no significant ion exchange taking place.

## Example 4

A quantity of -170 mesh vermiculite was stirred into an aqueous solution of 3M glycine and 1M antimony chloride ($SbCl_3$) together with an addition of methanol. The mixture was subjected to a shear force in a blender for a few minutes to form a gel. The gel was then separated by centrifuging, and the solid portion washed in distilled water.

After drying overnight, the vermiculite was divided into eight portions and each given a separate vapor phase/thermal treatment as in previous examples. Gravimetric measurements, made as before, showed essentially no antimony in the raw vermiculite, but approximately 38% by weight in the delaminated material.

Analyses of the eight heat treated samples for percent by weight antimony are shown below:

| Treatment | % Sb |
|---|---|
| 200$^\circ$ C/air | 37.7 |
| 200$^\circ$ C/$H_2$ | 39.9 |
| 400$^\circ$ C/air | 10.8 |
| 400$^\circ$ C/$H_2$ | 12.8 |
| 600$^\circ$ C/air | 3.8 |
| 600$^\circ$ C/$H_2$ | 7.4 |
| 800$^\circ$ C/air | 0.6 |
| 800$^\circ$ C/$H_2$ | 22.3 |

Cumulative moisture pickup values, as observed on each heat treated sample when exposed to 40% relative humidity, are shown in the following table:

7

| Treatment | Wt.% H$_2$O |
|---|---|
| 200°C/air | 2.54 |
| 200°C/H$_2$ | 2.73 |
| 400°C/air | 2.11 |
| 400°C/H$_2$ | 2.82 |
| 600°C/air | 2.40 |
| 600°C/H$_2$ | 0.37 |
| 800°C/air | 0.55 |
| 800°C/H$_2$ | 0.11 |

## Example 5

A quantity of 270 mesh vermiculite was stirred into a 1M aqueous solution of tin chloride (SnCl$_2$) at room temperature to exchange tin ions with ions from the interlayer of the vermiculite. The amount of vermiculite was such as to provide about 10% solids in the mixture. The ion-exchanged vermiculite was separated and washed thoroughly with distilled water. It was then dried overnight at 150°C.

The dry, ion-exchanged vermiculite was then divided into two portions. Both portions were thermally treated in a forming gas atmosphere for one hour. One portion was treated at a temperature of 400°C; the other at a temperature of 800°C.

X-ray diffraction (XRD) studies were performed on samples from both of the treated vermiculite portions. The table below lists several characteristic peaks that signify Sn. SnO$_2$ and vermiculite on an XRD trace. Also listed are the peaks and their relative intensities, as actually observed on the 400°C and the 800°C treated sampels, both in a forming gas atmosphere.

TABLE

| JCPDS Characteristic Peaks (Å) | Observed Peaks | | | |
|---|---|---|---|---|
| Sn | 400°C | | 800°C | |
| | Peak(Å) | Intensity(%) | Peak(Å) | Intensity(%) |
| 3.75 | - | - | - | - |
| 2.92 | 2.918 | 92 | 2.894 | 92 |
| 2.79 | 2.794 | 100 | 2.772 | 100 |
| 2.29 | - | - | - | - |
| 2.02 | 2.018 | 100 | 2.052 | 45 |
| 1.96 | - | - | 2.007 | 90 |
| SnO$_2$ | | | | |
| 3.35 | 3.340 | 29 | - | - |
| 2.64 | 2.647 | 19 | - | - |
| 1.77 | 1.768 | 3 | 1.776 | < 1 |
| Vermiculite | | | | |
| 14.20 | 14.050 | 5 | - | - |
| 4.57 | 4.610 | 5 | - | - |

The strong Sn peaks demonstrate a well ordered Sn coating at both temperatures. The SnO$_2$ peaks indicate a minor amount of the oxide at 400°C, and virtually none at 800°C.

The absence of the low angle values for vermiculite treated at 800°C. indicates that delamination of the vermiculite to less than 100Å has occurred. Higher angle values are still present of course.

## Example 6

A quantity of vermiculite was stirred in a 1M solution of copper chloride ($CuCl_2$) in 1M HCl at room temperature to exchange copper ions with ions from the interlayer of the vermiculite. The vermiculite constituted about 10% solids in the mixture. These solids were separated, thoroughly washed with distilled water and dried at 150°C.

The dry, ion-exchanged vermiculite was then divided into two portions as in Example 5. Both portions were thermally treated in a forming gas atmosphere for one hour. The treating temperature was 400°C for one portion and 600°C for the other.

X-ray diffraction (XRD) studies were performed on both samples as in Example 5. Characteristic peaks for Cu, $Cu_2O$ and vermiculite are listed below, together with actually observed values for each treated sample.

TABLE

| JCPDS Characteristic Peaks(Å) | Observed Peaks | | | |
|---|---|---|---|---|
| Cu | 400°C | | 600°C | |
| | Peak(Å) | Intensity % | Peak(Å) | Intensity % |
| 2.09 | 2.096 | 100 | 2.091 | 100 |
| 1.81 | 1.814 | 47 | 1.811 | 42 |
| 1.28 | - | - | - | - |
| $Cu_2O$ | | | | |
| 2.47 | 2.484 | 2 | 2.469 | 18 |
| 2.14 | - | - | 2.140 | 4 |
| 1.51 | 1.543 | 4 | 1.512 | 5 |
| Vermiculite | | | | |
| 14.20 | - | - | - | - |
| 4.57 | 4.640 | 2 | - | - |

The strong Cu peaks demonstrate a well ordered copper coating at both temperatures. The $Cu_2O$ peaks indicate a very minor presence of the oxide. The virtual absence of the low angle values for vermiculite again indicates delamination to less than about 100Å.

## Example 7

A mixture was prepared by stirring sepiolite into a solution of 0.0013 grams silver chloride (Ag Cl) in 200 ml. $NH_4OH$ at room temperature. Following the exchange of silver ions for ions from the sepiolite interlayer, the solids (about 10%) were separated, thoroughly washed and dried.

The dry, ion-exchanged sepiolite was then thermally treated at 800°C in a forming gas atmosphere. XRD studies were carried out on the treated sepiolite. Characteristic peaks for Ag are listed as in Examples 5 and 6, together with observed data that denote development of a silver coating.

9

TABLE

| JCPDS Characteristic Peaks(Å) | Observed Peaks | |
|---|---|---|
| Ag | Peak(Å) | Intensity |
| 2.36 | 2.367 | 100 |
| 2.04 | 2.051 | 44 |
| 1.44 | 1.448 | 29 |
| 1.23 | - | - |
| 1.18 | - | - |

It may be noted, relative to all examples, that the XRD observed peaks did not extend beyond about 1.40Å due to the particular apparatus employed.

By way of illustrating the improved stability achieved by the present inventive method, several vermiculite samples from different sources, as well as various other phyllosilicates, were subjected to comparative tests. Each sample was divided into four equal portions with each portion being heated at 800°C for one hour, but in a different atmosphere. Thus, one sample was heated in air; a second in a carbon dioxide atmosphere; a third in a forming gas (92% $N_2$ - 8% $H_2$) atmosphere; and the fourth in a methane atmosphere.

Subsequent to the heat treatment, each sample was observed to be delaminated.

Each sample was weighed before and after its heat treatment to compare the loss on ignition (LOI). Then, the samples were allowed to stand in air at a humidity level of about 40% and a temperature of 25°C for 144 hours to determine the per cent weight gain.

The materials tested were:

| Material | Source |
|---|---|
| 1. Vermiculite | Eucatex brand |
| 2. Vermiculite | South Africa |
| 3. Vermiculite | North Carolina |
| 4. Vermiculite | Minebra brand |
| 5. Sepiolite | |
| 6. Bentonite | |
| 7. Kaolin | |
| 8. Talc | |

TABLE I tabulates the LOI values, and the % Wt. Gain values, observed for each material, and each of the four treating atmospheres. The materials are designated by number as identified above.

TABLE I

| Sample | LOI (%) | | | | Wt. Gain (%) | | | |
|---|---|---|---|---|---|---|---|---|
| | Air | $CO_2$ | $N_2/H_2$ | $CH_4$ | Air | $CO_2$ | $N_2 \cdot H_2$ | $CH_4$ |
| 1. | 16.3 | 16.6 | 17.2 | 15.9 | 0.27 | 0.14 | 0.009 | 0.05 |
| 2. | 9.3 | 12.4 | 12.7 | 9.9 | 0.56 | 0.14 | 0.03 | - |
| 3. | 9.5 | 12.4 | 14.2 | 11.6 | 0.23 | 0.06 | 0.09 | - |
| 4. | 9.9 | 10.2 | 10.9 | - | 0.22 | 0.05 | 0.05 | 0.04 |
| 5. | 15.7 | 16.6 | 16.9 | 16.9 | 1.33 | 0.17 | 0.03 | - |
| 6. | 16.8 | 17.1 | 17.1 | - | 0.65 | 0.09 | 0.21 | 0.07 |
| 7. | - | - | - | - | 0.11 | 0.08 | 0.11 | 0.26 |
| 8. | 1.3 | 5.2 | 5.3 | 5.4 | 0.12 | 0.07 | 0.11 | 0.07 |

It is evident that the firing in a reactive vapor phase is equally, or more, effective in permitting volatile loss from the materials. However, the weight gain on standing is substantially less for the non-oxidizing vapor phase samples. The kaolin and talc samples are included as illustrative of natural materials frequently used as stable fillers in paints, plastics, and gels.

The effectiveness of the invention was further illustrated by comparing the volumes of four different gases evolved from treated and untreated phyllosilicate materials. Samples of talc and vermiculite were each divided into two portions. One portion was retained in the "as received" condition, while the other was heated in a forming gas atmosphere overnite at 800°C.

The treated samples were cooled, and all samples were exposed to ambient atmosphere. Each of the four portions was then outgassed under vacuum in a mass spectrometer at several successively increased temperatures. The amount of gas evolved from a sample was recorded at each temperature in terms of four different gases evolved. The measured values were normalized to microliters/gram for comparison.

TABLE II sets forth the normalized values at each temperature for each of the four samples measured.

## TABLE II

| Talc (as received) | | | | |
|---|---|---|---|---|
| Temp. (°C) | $H_2$ | $H_2O$ | $N_2/CO$ | $CO_2$ |
| 100 | 12 | 103 | 3 | 8 |
| 200 | 24 | 190 | 21 | 63 |
| 300 | 47 | 233 | 69 | 113 |
| 400 | 227 | 292 | 132 | 180 |
| 600 | 451 | 1496 | 165 | 340 |
| 800 | 1622 | 7874 | 347 | 128 |
| 1000 | 2076 | 2771 | 740 | 94 |
| Total | 4459 | 12,959 | 1477 | 926 |

| Talc (treated) | | | | |
|---|---|---|---|---|
| Temp. (°C) | $H_2$ | $H_2O$ | $N_2/CO$ | $CO_2$ |
| 100 | 2 | 2 | 1 | 1 |
| 200 | 3 | 5 | 5 | 5 |
| 300 | 3 | 8 | 14 | 17 |
| 400 | 8 | 13 | 14 | 10 |
| 600 | 28 | 75 | 26 | 15 |
| 800 | 60 | 336 | 129 | 70 |
| 1000 | 79 | 326 | 224 | 96 |
| Total | 183 | 765 | 413 | 214 |

| Vermiculite (as received) | | | | |
|---|---|---|---|---|
| Temp. (°C) | $H_2$ | $H_2O$ | $N_2/CO$ | $CO_2$ |
| 100 | 276 | 3160 | 40 | 50 |
| 200 | 178 | 2139 | 33 | 40 |
| 300 | 152 | 1908 | 42 | 54 |
| 400 | 173 | 1503 | 67 | 113 |
| 600 | 457 | 3950 | 388 | 1441 |
| 800 | 702 | 5067 | 342 | 232 |
| 1000 | 355 | 1272 | 371 | 384 |
| Total | 2293 | 18,999 | 1283 | 2314 |

TABLE II (Con't.)

| Vermiculite (treated) | | | | |
|---|---|---|---|---|
| Temp. (°C) | $H_2$ | $H_2O$ | $N_2/CO$ | $CO_2$ |
| 100 | 1 | 8 | 1 | 3 |
| 200 | 2 | 18 | 2 | 7 |
| 300 | 5 | 21 | 9 | 18 |
| 400 | 13 | 36 | 11 | 18 |
| 600 | 43 | 233 | 13 | 9 |
| 800 | 349 | 1137 | 62 | 22 |
| 1000 | 672 | 1851 | 97 | 45 |
| Total | 1085 | 3304 | 195 | 122 |

The stabilizing effect is evident. Outgassing up to about 400°C is considered to be primarily from the material surface. Above that temperature, it is thought that internal, or structural, outgassing predominates.

Electron diffraction studies were made on both vermiculite and talc samples that had been thermally treated at 800°C in a forming gas atmosphere. These were carried out since routine X-ray diffraction studies did not show a 10Å peak characteristic of the untreated materials. The electron diffraction values observed were very close to standard values for both materials as reported on JCPDS standard cards. However, lines below the 004 line, that is 001 and 002 lines, did not appear. This indicated that the materials were finely subdivided to less than a ten unit cell (100Å) thickness, but that the original talc and vermiculite structures were retained.

The greater degree of delamination achieved in the presence of a reactive vapor phase is further illustrated by transmission electron micrographs (TEMs) taken of two talc samples and two vermiculite samples. One talc sample was heated at 800°C in air for one hour. The other talc sample was heated in a forming gas atmosphere with the same time-temperature cycle. Likewise, one vermiculite sample was heated at 800°C in air; the other in a forming gas atmosphere.

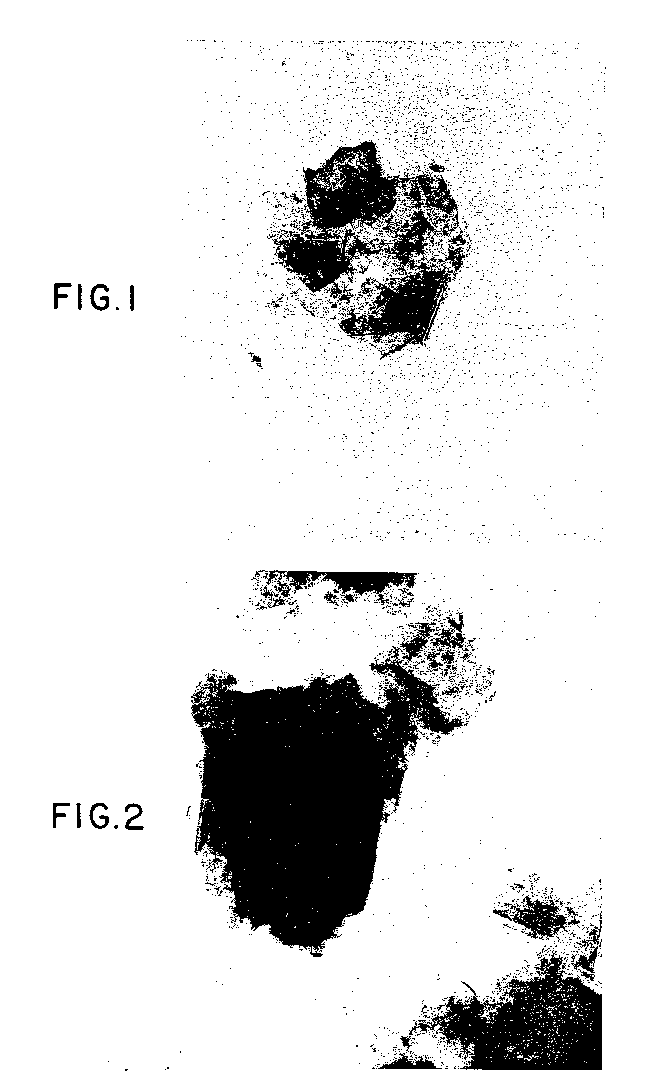

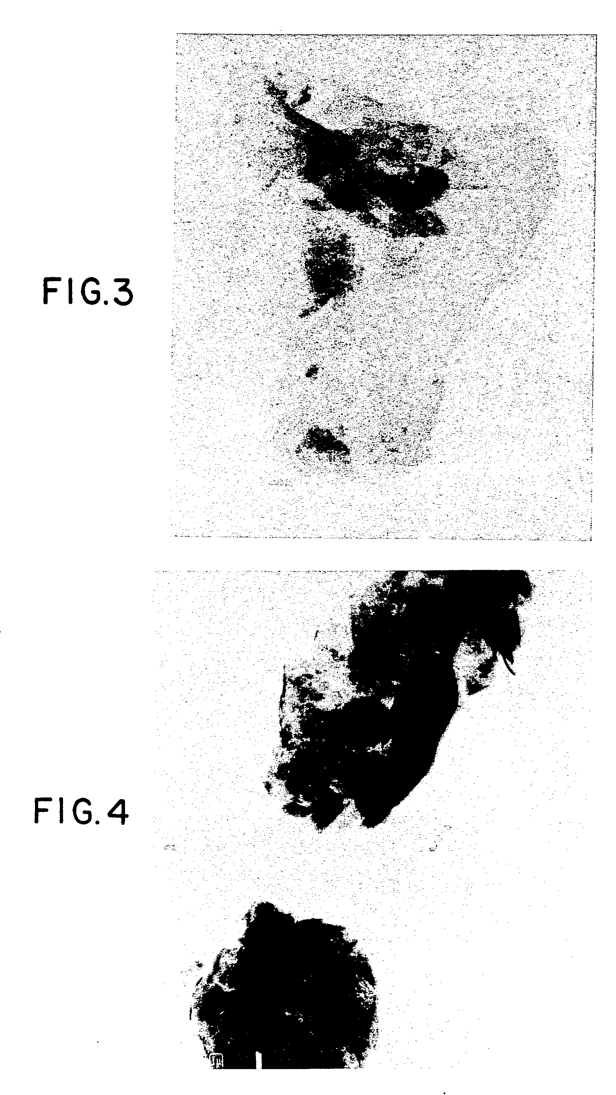

Description of the Drawing

FIGURE I is a TEM of the talc sample thermally treated in a forming gas atmosphere. The relative transparency of the particles indicated a layer, or C-axis, thickness of less than 1000Å. Magnification was 40,000X.

FIGURE II is a TEM of the talc sample thermally treated in an air atmosphere. The total opacity indicates a much greater particle thickness than that of the FIGURE I sample. Magnification was 20,000X.

FIGURE III is a TEM of the vermiculite sample thermally treated in a forming gas atmosphere. The magnification was 253,000X, the micrograph transparency indicates the thickness less than 1000Å, and the increased magnification shows the uneven particle surface. The latter is thought to arise from gas evolution from within the particle.

FIGURE IV is a TEM of the vermiculite sample thermally treated in an air atmosphere. Magnification was 40,000X. As in the talc sample of FIGURE II, the opacity indicates a much greater particle thickness than the forming gas treated sample of FIGURE III.

**Claims**

1. A delaminated phyllosilicate composed of particles less than 1000Å in thickness, and being hydrolytically and hygroscopically stabilized.

2. The delaminated phyllosilicate in accordance with claim 1 wherein the phyllosilicate surface has a reactive organic site attached thereto.

3. The delaminated phyllosilicate particles of claim 1, having a functional aspect ratio of at least 100:1.

4. A delaminated phyllosilicate particle less than 1000Å in thickness and characterized by a metal coating over its surface, the metal being selected from the transition elements and metals of groups 3a, 4a, 5a and 6a of the Periodic Table.

5. Phyllosilicate in accordance with claim 1 or 4 wherein the phyllosilicate is vermiculite, sepiolite, or talc.

6. Phyllosilicate in accordance with claim 1 or 4 wherein the metal is tin, antimony, copper, lead, or a noble metal.

7. The delaminated phyllosilicates of claim 3, characterized by use in a compressed body.

8. The metal coated phyllosilicate of claim 4, characterized by use in a ceramic-metal composite.

9. A method of producing the delaminated phyllosilicate of claim 1, characterized in that it is hydrolytically and hygroscopically stabilized by heating a phyllosilicate in contact with a reactive non-oxidizing vapor phase for a time and at a temperature sufficient to delaminate the phyllosilicate.

10. Method in accordance with claim 9 wherein the time of treatment does not exceed about one hour.

11. Method in accordance with claim 9 or 10 wherein the temperature at which the material is heated is in the range of about 400°C to about 1000°C.

12. A method in accordance with claim 9, 10 and 11 wherein the phyllosilicate is delaminated in a forming gas atmosphere or hydrogen.

13. A method in accordance with claim 3 wherein the delaminated phyllosilicate is exposed to a selected vapor phase at a temperature such that a controlled organic reactive site is chemically bonded to the phyllosilicate surface.

14. Method in accordance with claim 13 wherein the phyllosilicate is delaminated at a temperature above that at which the reactive site forms, and the delaminated phyllosilicate is cooled to an intermediate temperature for formation of the reactive site.

15. Method in accordance with claim 13 wherein the reactive site is an attached radical, a pendent group, or a monomer.

16. Method in accordance with claim 13 wherein the atmosphere is carbon monoxide, and an organic monomer is formed on the surface.

17. Method of producing the metal coated phyllosilicate particle according to any one of claims 4, 5 or 6, which comprises exchanging metal ions from an external source with ions from the phyllosilicate, delaminating the phyllosilicate to form particles and subjecting the particles to a thermal treatment while exposed to a reactive, non-oxidizing vapor phase, the metal being selected from the transition elements and metals of groups 3a, 4a, 5a and 6a of the Periodic Table.

18. Method in accordance with claim 17 wherein the phyllosilicate is delaminated by contact with an organic expanding agent.

19. A method in accordance with claim 17 wherein the phyllosilicate is delaminated during the vapor phase/thermal treatment.

20. A method in accordance with claim 17 wherein the ion exchange is effected prior to the delaminating heat treatment.

FIG.1

FIG.2

FIG.3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 386 502 (ICI)<br>* Claims 1,5; page 2, lines 12-15; page 1, lines 8-11 * | 1,3,5 | C 04 B 14/20<br>C 01 B 33/28<br>C 01 B 33/22 |
| A | | 9 | |
| X | US-A-4 077 938 (N. DAIMON et al.)<br>* Claim 12; column 2, lines 2-5 * | 1-3 | |
| X | US-A-4 454 237 (S.N. HODA)<br>* Claims 3,7 * | 1-3,5,7 | |
| D,A | US-A-3 420 645 (M.L. HAIR) | | |
| A | GB-A-1 016 385 (COMMONWEALTH SCIENTIFIC AND INDUSTRIAL RESEARCH ORGANIZATION)<br>* Claims 1-4 * | | |
| A | US-A-4 497 869 (O. KAMIGAITO et al.) | | |
| A | GB-A-2 115 396 (POTTERS INDUSTRIES INC.) | | TECHNICAL FIELDS SEARCHED (Int. Cl.4)<br><br>C 04 B 14<br>C 04 B 20 |

The present search report has been drawn up for all claims

| Place of search | Date of completion of the search | Examiner |
|---|---|---|
| THE HAGUE | 28-11-1988 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)